# EUROPÄISCHE PATENTSCHRIFT

(11) **EP 0 751 887 B1**
(45) Veröffentlichungstag und Bekanntmachung des Hinweises auf die Patenterteilung: **30.06.1999**
(21) Anmeldenummer: 95912205.2
(22) Anmeldetag: 04.03.1995
(51) Int. Cl.: B60T 8/00

(54) **VERFAHREN UND SCHALTUNGSANORDNUNG ZUR ERHÖHUNG DER FAHRSTABILITÄT FÜR KRAFTFAHRZEUGE MIT BLOCKIERSCHUTZREGELUNG**
METHOD AND CIRCUIT FOR INCREASING THE STABILITY OF MOTOR VEHICLES FITTED WITH ANTI-LOCK BRAKE SYSTEMS
PROCEDE ET CIRCUIT PERMETTANT D'AMELIORER LA TENUE DE ROUTE D'AUTOMOBILES EQUIPEES D'UN SYSTEME ANTIBLOCAGE

(30) Priorität: 25.03.1994 DE 4410299
(43) Veröffentlichungstag der Anmeldung: 08.01.1997
(73) Patentinhaber: Continental Teves AG & Co. oHG, 60488 Frankfurt (DE)
(72) Erfinder: BUSCHMANN, Gunther, D-65510 Idstein (DE)
(86) Internationale Anmeldenummer: EP9500806
(87) Internationale Veröffentlichungsnummer: WO9526284

(56) Entgegenhaltungen:
- EP-A- 0 393 375
- DE-A- 3 717 531
- US-A- 4 986 611

## Beschreibung

Die Erfindung bezieht sich auf ein für Kraftfahrzeuge mit Blockierschutzregelung vorgesehenes Verfahren zur Erhöhung der Fahrstabilität in Fahrsituationen mit niedrigem Reibbeiwert, bei dem der Reibbeiwert durch Messen, Auswerten und logisches Verknüpfen des Drehverhaltens der einzelnen Räder näherungsweise ermittelt wird. Schaltungsanordnungen zur Durchführung des Verfahrens gehören ebenfalls zu der Erfindung.

Aus der DE 35 00 745 C2 ist bereits eine Schaltungsanord nung der Anpassung der Regelung einer blockiergeschützten Bremsanlage an den momentanen Reibbeiwert zwischen Fahrbahn und Reifen bekannt, bei der zum Zeitpunkt des Instabilwerdens eines Rades die Geschwindgikeit des augenblicklich schnellsten Rades und die Verzögerung dieses Rades ermittelt und aus diesen Größen die Fahrzeug-Geschwindigkeit sowie der momentane Reibbeiwert abgeleitet werden. In Abhängigkeit von dem Reibbeiwert wird dann die Ansteuerung der Bremsdruck-Steuerventile dem momentanen Reibbeiwertniveau angepaßt. Auf diese Weise kann z.B. beim Erkennen eines niedrigen Reibbeiwertes, also auf glatter Fahrbahn, die Regelung auf "niedriges Druckniveau" eingestellt werden, wodurch u.a. der Verbrauch an Hilfsenergie gesenkt und die den Fahrkomfort beeinträchtigenden Druckschwankungen während einer Regelbremsung verringert werden. Auf hohem Reibbeiwert muß dagegen die Einsteuerung eines hohen Bremsdruckes möglich sein, um den auf trockener Fahrbahn gegebenen hohen Haftwert zwischen Reifen und Fahrbahn zur Erzielung eines kurzen Bremsweges ausnutzen zu können.

Eine Blockierschutzregelung hat grundsätzlich die Aufgabe, die Fahrstabilität und Lenkbarkeit eines Fahrzeugs in jeder Situation zu erhalten und gleichzeitig eine Abbremsung mit möglichst kurzem Bremsweg herbeizuführen. Bekanntlich sind dies jedoch widersprüchliche Forderungen, weil die für die Fahrstabilität und Lenkbarkeit verantwortlichen Seitenführungskräfte im entscheidenden Bereich der µ-Schlupf-Kurve mit ansteigendem Bremsdruck und damit ansteigendem Schlupf abnehmen. Eine gewisse Verringerung der Seitenführungskräfte zugunsten einer effektiven Abbremsung muß daher in Kauf genommen werden.

Der Erfindung liegt nun die Aufgabe zugrunde, bei einer Blockierschutzregelung die Fahrstabilität in bestimmten, kritischen Fahrsituationen zu erhöhen, ohne einen längeren Bremsweg in Notsituationen oder bei Panbikbremsungen in Kauf nehmen zu müssen.

Es hat sich gezeigt, daß diese Aufgabe dadurch gelöst werden kann, daß bei einem Verfahren der eingangs genannten Art beim Instabilwerden eines Rades in einer Fahrsituation mit niedrigem Reibbeiwert und gleichzeitig niedrigem Vordruck die Blockierschutzregelung nach einem Regelschema oder Regelprogramm abläuft, bei dem dem Erhalt der Seitenführungskräfte der Vorderräder oder aller Räder und damit dem Erhalt der Fahrstabilität und Lenkbarkeit des Fahrzeugs Vorrang vor dem Erreichen eines kurzen Bremsweges eingeräumt wird.

Die Erfindung macht sich die Erkenntis zunutze, daß es bei einer Blockierschutzregelung Situationen oder Regelphasen gibt, in denen der Fahrstabilität Vorrang vor dem Verzögern des Fahrzeugs eingeräumt werden sollte, und daß diese Situationen durch logische Verknüpfung und Interpretation der vorhandenen Informationen erkannt werden können. In vielen Fällen, in denen die Blockierschutzregelung bereits anspricht, handelt es sich nämlich in Wirklichkeit nicht um eine "Notbremsung", bei der eine Gefahr vorliegt, der durch einen kurzen Bremsweg ausgewichen werden kann. Vielmehr ist es in vielen Fällen, in denen der Fahrer relativ leicht auf die Bremse tritt, wichtiger, die Lenkfähigkeit oder der Fahrstabilität des Fahrzeugs zu erhalten, als auf einen kurzen Bremsweg zu achten. In solchen Situationen, nämlich auf glatter Fahrbahn, ist die Verringerung der Seitenführungskräfte durch die optimale Ausnutzung des Kraftschlusses von Nachteil. In diesen Situationen wird durch die Erfindung eine wesentliche Verbesserung der Regelung erreicht, weil zeitweise der Fahrstabilität und Lenkbarkeit Vorrang vor der Fahrzeugverzögerung eingeräumt wird.

Ein vorteilhaftes Ausführungsbeispiel der Erfindung besteht darin, daß nach dem Anstieg des Vordrucks oder einer indirekt mit dem Vordruck oder der Pedalbetätigungskraft verbundenen Größen, z.B. des Pedal- oder Hauptzylinderskolbenweges, über einen vorgegebenen Grenzwert die Blockierschutzregelung auf "Normalbetrieb" zurückgeschal tet wird, in dem zugunsten eines kürzeren Bremsweges das Bremsdruckniveau in den Radbremsen der geregelten Räder höher liegt als in der Regelphase mit Stabilitäts-Vorrang.

Ein Vordruck, der durch eine Pedalbetätigung mit mäßiger, unter einem vorgegebenen Grenzwert liegender Fußkraft hervorgerufen wird, gilt im Rahmen des erfindungsgemäßen Verfahrens als "niedrig".

Nach einem weiteren vorteilhaften Ausführungsbeispiel des erfindungsgemäßen Verfahrens wird aus dem Drehverhalten der Räder während einer Regelung auf die Höhe des Vordrucks geschlossen. Ein gleichzeitiges oder nahezu gleichzeitiges Instabilwerden beider Vorderräder oder mindestens eines Vorderrades und beider Hinterräder wird als Indiz für hohen Vordruck betrachtet.

Ferner kann es erfindungsgemäß vorgesehen werden, in der Regelphase mit Stabilitäts-Vorrang die Frequenz der Blockierschutzregelung durch Verzögerung des Bremsdruckaufbaues oder durch Verringerung der Bremsdruckaufbau-Geschwindigkeit im Vergleich zur Regelung im "Normalbetrieb" zu reduzieren.

In den beigefügten Unteransprüchen sind noch weitere vorteilhafte Ausführungsbeispiele de Erfindung sowie Schaltungsanordnungen zur Durchführung des erfindungsgemäßen Verfahrens beschrieben.

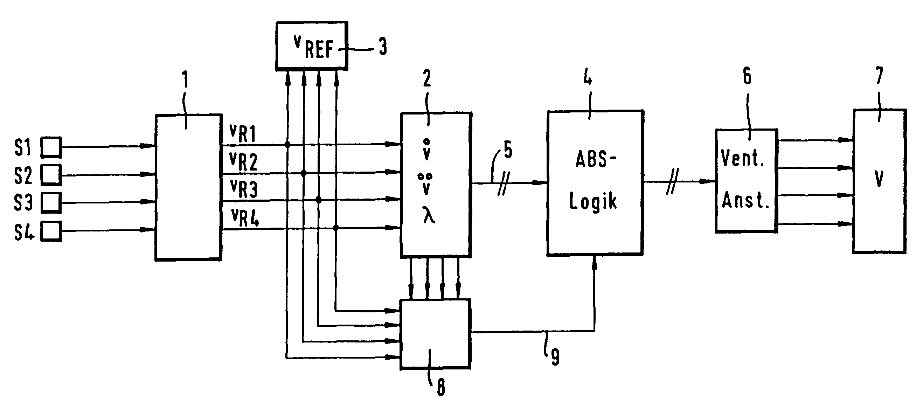

Weitere Merkmale, Vorteile und Anwendungsmöglichkeiten der Erfindung gehen aus der folgenden Beschreibung anhand der beigefügten Abbildung hervor, die in schematisch verein fachter Darstellung die wichtigsten elektronischen Komponenten einer Schaltungsanordnung nach der Erfindung wiedergibt.

Nach der dargestellten Schaltungsanordnung zur Blockierschutzregelung werden die in bekannter Weise mit Hilfe von Radsensoren S1 bis S4 gewonnenen Informationen über das Drehverhalten der einzelnen Räder einer Aufbereitungsschaltung 1 zugeführt. In dieser Schaltung 1 werden Signale gewonnen, die die Geschwindigkeiten v_{R1}bis v_{R4} der einzelnen Räder wiedergeben und aus denen in einer Auswerteschaltung 2 in bekannter Weise die für eine ABS-Regelung benötigten Informationen über die momentane Radverzögerung oder Radbeschleunigung ±v_{R,} den Ruck v_{R,} Schlupf usw. - je nach Ausführungsart der Regelschaltung - gewonnen werden. In einem weiteren Schaltkreis 3 wird eine sogen. Fahrzeug-Referenzgeschwindigkeit v_{REF}abgeleitet, die näherungsweise die Fahrzeuggeschwindigkeit wiedergibt und die zur Beurteilung des Drehverhaltens der einzelnen Räder, insbesondere des momentanen Radschlupfes, und zur radindividuellen Bremsdruckregelung benötigt wird.

In einem anschließenden Schaltkreis 4, der hier als ABS-Logik bezeichnet ist und der hier über eine Vielfach-Leitung 5 an die Schaltung 2 angeschlossen ist, werden mit Hilfe komplexer elektronischer Schaltungen die Blockierschutzregelsignale erzeugt, die einer Ventil-Ansteuerung 6 zugeführt werden. Am Ausgang dieser Ventil-Ansteuerung 6 stehen die Bremsdrucksteuer- oder -regelsignale zur Verfügung, mit denen die in einem Ventilblock 7 zusammengefaßten Hydraulikventile betätigt und dadurch der Bremsdruck in der gewünschten, durch die ABS-Logik vorge gebenen und von den Signalen der Sensoren S1 bis S4 abhängigen Weise angesteuert werden.

Zur Durchführung des erfindungsgemäßen Verfahrens ist eine Bewertungs-Schaltung 8 vorgesehen, dem ebenfalls die in der Schaltung 1 aufbereiteten Geschwindigkeitssignale v_{R1}bis v_{R4} zugeführt werden. Außerdem führen Signalleitungen von der Auswerteschaltung 2 zu der Schaltung 8. Über diesen Weg wird die Schaltung 8 u.a. über die momentanen Radverzögerungen und -beschleunigungen v_{R} informiert.

In dem Schaltkreis 8 werden durch Auswertung und logische Verknüpfung der Radgeschwindigkeitssignale v_{R} unter Berücksichtigung der momentanen Radverzögerung v_{R} und Fahrzeugverzögerung Kriterien für den Vordruck und den momentanen Reibbeiwert gewonnen. Werden sowohl der Reibbeiwert als auch der Vordruck als "niedrig" erkannt, weil sie unter vorgegebenen Grenzwerten liegen, und tritt dennoch eine Radinstabilität auf, wird der ABS-Logik 4 über eine Signalleitung 9 die Umschaltung auf ein Regelprogramm mit Stabilitäts-Vorrang "befohlen". Sind die vorgenannten Bedingungen nicht mehr erfüllt, wird der Vordruck von dem Fahrer erhöht oder erreicht das Fahrzeug griffige Fahrbahnen mit höherem Reibbeiwert, wird mit Hilfe des Schaltkreises 8 und der ABS-Logik 4 wieder auf "Normalbetrieb" zurückgeschaltet.

Natürlich ist es auch möglich, in Abhängigkeit von der tatsächlichen Höhe des Vordrucks und/oder des Reibbeiwertes oder in Abhängigkeit von Sicherheitskriterien mehrere Ebenen für den Stabilitäts-Vorrang vorzugeben. Z.B. könnte es zweckmäßig sein, den Stabilitäts-Vorrang einzuschränken oder aufzuheben, wenn nicht auszuschließen ist, daß trotz geringen Vordrucks eine Notbremsung vorliegen könnte.

Die beschriebene Auswertung der Signale mit Hilfe der Schaltung 8, die logische Verknüpfung der Signale mittels der Schaltungen 2,4 und 6 kann entweder mit festverdrahteten Schaltkreisen oder natürlich auch, was vorzuziehen ist, mit programmgesteuerten Schaltungen, wie Microcomputer oder Microcontroller, realisiert werden. Im letztgenannten Fall wird die Erfindung durch entsprechende Erweiterung der Regler-Software realisiert.

Wie zuvor bereits geschildert, führt die erfindungsgemäße Umschaltung auf eine Regelung mit Stabilitäts-Vorrang zu einer Verringerung des Bedarfs an hydraulische Energie. Bei einem hydraulischen Bremsensystem mit einer Hydraulikpumpe, die die hydraulische Hilfsenergie liefert bzw. das in den Regelphasen abgeleitete Druckmittel zurückfördert, kann somit die Pumpe mit geringerer Leistung betrieben werden. Dies hat eine wünschenswerte Reduzierung der häufig störenden Pumpen- und Ventilgeräusche und anderer unerwünschter Nebeneffekte der Pumpenanschaltung zur Folge.

Bei geregelten Bremsanlagen, die ohne Hydraulikpumpe auskommen und bei denen daher der Verbrauch an Druckmittel durch den Druckabbau während der Blockierschutzregelung minimiert werden muß, ist die Erfindung ebenfalls von Nutzen.

## Patentansprüche

1. Verfahren zur Erhöhung der Fahrstabilität in Fahrsituationen mit niedrigem Reibbeiwert, für Kraftfahrzeuge mit Blockierschutzregelung, bei dem der Reibbeiwert durch Messen, Auswerten und logisches Verknüpfen des Drehverhaltens der einzelnen Räder näherungsweise ermittelt wird, dadurch **gekennzeichnet**, daß beim Einsetzen der Blockierschutzregelung in einer Fahrsituation mit niedrigem Reibbeiwert und bei niedrigem Vordruck die Blockierschutzregelung nach einem Regelschema oder Regelprogramm mit "Stabilitäts-Vorrang" abläuft, bei dem dem Erhalt der Seitenführungskräfte der Vorderräder oder aller Räder und damit dem Erhalt der Lenkbarkeit und der Fahrstabilität des Fahrzeugs Vorrang vor dem Erreichen eines kurzen Bremsweges eingeräumt wird.

2. Verfahren nach Anspruch 1, dadurch **gekennzeichnet**, daß nach Anstieg des Vordrucks, der Bremspedalbetätigungskraft, des Pedal- oder Kolbenweges über einen vorgegebenen Grenzwert oder bei einem Indiz auf einen höheren Vordruck die Blockierschutzregelung auf "Normalbetrieb" umgeschaltet wird, in dem zugunsten eines kürzeren Bremswegs das Bremsdruckniveau in den Radbremsen der geregelten Räder höher liegt als bei Stabilitäts-Vorrang.

3. Verfahren nach Anspruch 1 oder 2, dadurch **gekennzeichnet**, daß die Verzögerung des momentan schnellsten Rades zum Zeitpunkt des ersten Auftretens einer Radinstabilität oder des Einsetzens der Blockierschutzregelung als Maß für den momentanen Reibbeiwert bewertet wird und daß ein Reibbeiwert unter etwa 0,2 bis 0,3, vorzugsweise unter 0,2 bis 0,25, als "niedrig" gilt.

4. Verfahren nach einem oder mehreren der Ansprüche 1 bis 3, dadurch **gekennzeichnet**, daß ein Vordruck, der durch eine Pedalbetätigung mit mäßiger, unter einem vorgegebenen Grenzwert liegender Fußkraft hervorgerufen wird, als "niedrig" bewertet wird.

5. Verfahren nach einem oder mehreren der Ansprüche 1 bis 4, dadurch **gekennzeichnet**, daß aus dem Drehverhalten der Räder während einer Regelung auf die Höhe des Vordrucks geschlossen wird, wobei ein gleichzeitiges oder nahezu gleichzeitiges Instabilwerden beider Vorderräder oder mindestens eines Vorderrades und beider Hinterräder als Indiz für hohen Vordruck gewertet wird.

6. Verfahren nach einem oder mehreren der Ansprüche 1 bis 5, dadurch **gekennzeichnet**, daß in der Fahrsituation, in der das Regelschema bzw. Regelprogramm mit Stabilitäts-Vorrang abläuft, die Frequenz der Blockierschutzregelung durch Verzögerung des Bremsdruckaufbaues und/oder durch Verringerung der Bremsdruckaufbaugeschwindigkeit im Vergleich zu der Frequenz bzw. zu dem Druckaufbau im Normalbetrieb reduziert wird.

7. Verfahren nach Anspruch 6, dadurch **gekennzeichnet**, daß der Bremsdruckaufbau durch Verlängerung der Pausen zwischen den Druckaufbaupulsen, z.B. auf das 2- bis 4-fache verzögert und reduziert wird.

8. Schaltungsanordnung zur Durchführung des Verfahrens nach einem oder mehreren der Ansprüche 1 bis 7, für eine hydraulische Bremsanlage mit Blockierschutzregelung, mit Radsensoren zur Ermittlung des Drehverhaltens der einzelnen Räder, mit Schaltkreisen zur Aufbereitung, Auswertung und logischen Verknüpfung der Sensorsignale und zur Erzeugung von Bremsdruck-Steuersignalen, mit denen elektrisch betätigbare Hydraulikventile, die in den Druckmittelleitungen der Bremsanlage eingefügt sind, angesteuert werden, mit einer Hydraulikpumpe zur Hilfsdruckversorgung oder zur Rückführung des in der Bremsdruck-Abbauphase während einer Regelung aus den Radbremsen abgeleiteten Druckmittels, dadurch **gekennzeichnet**, daß Bewertungs-Schaltkreise (8) vorhanden sind, die beim Erkennen einer Fahrsituation, in der beim Instabilwerden eines Rades der momentane Reibbeiwert niedrig ist und der Vordruck unter einem vorgegebenen Grenzwert liegt, die Blockierschutzregelung auf ein Regelschema oder Regelprogramm mit Stabilitäts-Vorrang umschalten, das der Fahrstabilität und/oder Lenkbarkeit des Fahrzeugs Vorrang vor dem Erreichen eines optimal kurzen Bremsweges gibt.

9. Schaltungsanordnung nach Anspruch 8, dadurch **gekennzeichnet**, daß die Bewertungs-Schaltkreise (8) beim Anstieg des Reibbeiwertes an mindestens einer Fahrzeugseite oder beim Anstieg des Vordrucks über einen vorgegebenen Grenzwert das Regelschema oder Regelprogramm sofort oder verzögert in den "Normalbetrieb", in dem das Niveau des geregelten Bremsdruckes höher liegt als in der Regelphase mit Stabilitäts-Vorrang, zurückschaltet.

10. Schaltungsanordnung nach Anspruch 8 oder 9, dadurch **gekennzeichnet**, daß in der Regelphase mit Stabilitäts-Vorrang das Einschalten der Hydraulikpumpe unterbleibt oder verzögert wird.

11. Anwendung der Schaltungsanordnung nach einem oder mehreren der Ansprüche 8 bis 10 für ein pumpenloses Antiblockiersystem.

## Claims

1. Method of enhancing the driving stability in situations with low coefficients of friction, for use in automotive vehicles with anti-lock control, wherein the coefficient of friction is determined in approximation by measuring, assessing and logically combining the rotational behavior of the individual wheels,
**characterized** in that upon commencement of the anti-lock control in a driving situation with a low coefficient of friction and at a low pilot pressure, anti-lock control is performed according to a control pattern or control program with "stability priority" conceding priority to maintaining the lateral control forces of the front wheels or all wheels and, thus, maintaining steerability and driving stability of the vehicle over achieving a short stopping distance.

2. Method as claimed in claim 1,
**characterized** in that, after rise of the pilot pressure, the brake pedal-actuating force, the pedal travel or piston travel in excess of a predetermined limit value, or in the event of an indication of a higher pilot pressure, anti-lock control is switched back to "normal operation" where, in favor of a shorter stopping distance, the braking pressure level in the wheel brakes of the controlled wheels is higher than during control with stability priority.

3. Method as claimed in claim 1 or 2,
**characterized** in that the deceleration of the instantaneously fastest wheel at the time of the first incipient wheel instability or the commencement of anti-lock control is assessed as a parameter of the instantaneous coefficient of friction, and in that a coefficient of friction below 0.2 to 0.3 approximately, preferably below 0.2 to 0.25, is considered as "low".

4. Method as claimed in any one or more of claims 1 to 3,
**characterized** in that a pilot pressure which is produced by pedal operation with moderate pedal force that is below a predetermined limit value is assessed as "low".

5. Method as claimed in any one or more of claims 1 to 4,
**characterized** in that the magnitude of the pilot pressure is concluded from the rotational behavior of the wheels during a control operation, and a simultaneous or almost simultaneous incipient instability of both front wheels or at least one of the front wheels and both rear wheels is assessed as an indication of a high amount of pilot pressure.

6. Method as claimed in any one or more of claims 1 to 5,
**characterized** in that in the driving situation where the control pattern or control program with stability priority is executed, the frequency of the anti-lock control operation is reduced by delaying the braking pressure increase and/or by reducing the speed of braking pressure increase compared to the frequency or the pressure increase in the normal operation.

7. Method as claimed in claim 6,
**characterized** in that the braking pressure increase is delayed and reduced by extension of the pauses between the pressure-increase pulses, for example, to two times up to four times the length.

8. Circuit arrangement for implementing the method as claimed in any one or more of the claims 1 to 7, for use in a hydraulic brake system with anti-lock control, including wheel sensors for determining the rotational behavior of the individual wheels, circuits for processing, assessing and logically combining the sensor signals and generating braking pressure control signals by which electrically operable hydraulic valves inserted in pressure fluid lines of the brake system are driven, a hydraulic pump for the auxiliary pressure supply or the return of pressure fluid discharged from the wheel brakes during a control operation in the braking pressure reduction period,
**characterized** in that evaluating circuits (8) are provided which, upon detection of a driving situation where the instantaneous coefficient of friction is low and the pilot pressure is below a predetermined limit when a wheel becomes unstable, switch the anti-lock control over to a control pattern or control program with stability priority which concedes priority to driving stability and/or steerability of the vehicle over achieving an optimally short stopping distance.

9. Circuit arrangement as claimed in claim 8,
**characterized** in that, upon rise of the coefficient of friction on at least one vehicle side or upon rise of the pilot pressure in excess of a predetermined limit value, the evaluating circuits (8) will switch back immediately or with delay the control pattern or control program to "normal operation" where the level of the controlled braking pressure is higher than in the control period with stability priority.

10. Circuit arrangement as claimed in claim 8 or claim 9,
**characterized** in that the activation of the hydraulic pump is prevented or delayed in the control period with stability priority.

11. Application of the circuit arrangement as claimed in any one or more of the claims 8 to 10 for an anti-lock system without pump.

## Revendications

1. Procédé permettant d'accroître la stabilité de conduite dans des situations de conduite à faible coefficient de frottement, pour véhicules automobiles à régulation antiblocage, selon lequel le coefficient de frottement est approximativement déterminé en mesurant, analysant et soumettant à un traitement mathématique logique le comportement des différentes roues en rotation, caractérisé en ce que, lorsque la régulation antiblocage entre en action dans une situation de conduite à faible coefficient de frottement et en cas de faible pression de base, la régulation antiblocage se déroule suivant un schéma de régulation ou programme de régulation à "priorité de stabilité", selon lequel avant qu'une courte distance de freinage ne soit obtenue, la priorité est cédée à l'obtention des forces de guidage latéral des roues avant ou de toutes les roues et donc à l'obtention de la maniabilité de direction et de la stabilité de conduite du véhicule.

2. Procédé suivant la revendication 1, caractérisée en ce qu'après une augmentation de la pression de base, de la force d'actionnement de pédale de frein, de la course de pédale ou de la course de piston, il est procédé, au-delà d'une valeur limite préfixée ou pour un indice indiquant une pression de base plus élevée, à une commutation de la régulation antiblocage au "fonctionnement normal", le niveau de pression de freinage dans les freins des roues soumises à régulation étant plus élevé que dans le cas d'une priorité de stabilité, en faveur d'une distance de freinage plus courte.

3. Procédé suivant la revendication 1 ou 2, caractérisé en ce que le ralentissement de la roue momentanément la plus rapide à l'instant de la première apparition d'une instabilité de roue ou de l'entrée en action de la régulation antiblocage est utilisé comme mesure du coefficient de frottement instantané et en ce qu'un coefficient de frottement inférieur à environ 0,2 à 0,3, de préférence inférieur à 0,2 à 0,25, est considéré comme "faible".

4. Procédé suivant une ou plusieurs des revendications 1 à 3, caractérisé en ce qu'une pression de base, qui est due à un actionnement de pédale avec une force au pied modérée, située au-dessous d'une valeur limite préfixée, est considérée comme "faible"

5. Procédé suivant l'une suivant une ou plusieurs des revendications 1 à 4, caractérisé en ce que le comportement des roues en rotation pendant une régulation permet de tirer une conclusion concernant le niveau de la pression de base, tandis qu'un passage simultané ou presque simultané en instabilité des deux roues avant ou d'au moins une roue avant et des deux roues arrière est considéré comme un indice d'une pression de base élevée.

6. Procédé suivant une ou plusieurs des revendications 1 à 5, caractérisé en ce que, dans la situation de conduite dans laquelle le schéma de régulation ou programme de régulation se déroule avec priorité de stabilité, la fréquence de la régulation antiblocage est réduite au moyen d'un retard de l'établissement de pression de freinage et/ou au moyen d'une réduction de la vitesse d'établissement de pression de freinage en comparaison de la fréquence ou de l'établissement de pression en "fonctionnement normal".

7. Procédé suivant la revendication 6, caractérisé en ce que l'établissement de pression de freinage de retardé et réduit au moyen d'un allongement des intervalles entre impulsions d'établissement de pression, de par exemplaire 2 à 4 fois.

8. Agencement de circuit pour la mise en oeuvre du procédé suivant une ou plusieurs des revendications 1 à 7, pour système hydraulique de freinage à régulation antiblocage, comprenant des capteurs de roue, servant à déterminer le comportement des différentes roues en rotation, des circuits, servant à mettre en forme, analyser et soumettre à un traitement mathématique logique les signaux de capteur et à produire des signaux de commande de pression de freinage au moyen desquels sont commandées des valves hydrauliques à actionnement électrique qui sont interposées dans les conduites d'agent de pression du système de freinage, et une pompe hydraulique servant à l'alimentation en pression auxiliaire et au retour de l'agent de pression évacué des freins de roue dans la phase de suppression de pression de freinage pendant une régulation, caractérisé en ce qu'il est prévu des circuits d'évaluation (8) et, lors de la constatation d'une situation de conduite dans laquelle, lorsqu'une roue devient instable, le coefficient de frottement instantané est faible et la pression de base est inférieure à une valeur limite préfixée, les circuits d'évaluation (8) commutent la régulation antiblocage sur un schéma de régulation ou programme de régulation à priorité de stabilité qui cède la priorité à la stabilité de conduite et/ou la maniabilité de direction du véhicule avant que soit atteinte une courte distance de freinage optimale.

9. Agencement de circuit suivant la revendication 8, caractérisé en ce que, lorsque le coefficient de frottement augmente sur au moins un côté du véhicule ou lorsque la pression de base augmente au-delà d'une valeur limite préfixée, les circuits d'évaluation (8) commutent, immédiatement ou avec retard, le schéma de régulation ou programme de régulation de façon à le faire retourner dans le "fonctionnement normal" dans lequel le niveau de la pression de freinage objet de la régulation est plus élevé que dans la phase de régulation à priorité de stabilité.

10. Agencement de circuit suivant la revendication 8 ou 9, caractérisé en ce que, dans la phase de régulation à priorité de stabilité, la mise en circuit de la pompe hydraulique n'a pas lieu ou est retardée.

11. Application de l'agencement de circuit suivant une ou plusieurs des revendications 8 à 10 à un système antiblocage sans pompe.
